# EUROPEAN PATENT SPECIFICATION

(11) **EP 1 029 030 B1**
(45) Date of publication and mention of the grant of the patent: **15.01.2003**
(21) Application number: 98949787.0
(22) Date of filing: 08.10.1998
(51) Int. Cl.: C10M 171/00, C10M 147/00, C10M 151/02

(54) **FOAMING-RESISTANT HYDROCARBON OIL COMPOSITIONS**
SCHAUMARME KOHLENWASSERSTOFFÖLZUSAMMENSETZUNGEN
COMPOSITIONS D'HUILE HYDROCARBURE ANTIMOUSSE

(30) Priority: 21.10.1997 US 954880
(43) Date of publication of application: 23.08.2000
(73) Proprietor: Solutia Inc., St. Louis, MO 63166 (US)
(72) Inventor: GROLITZER, Marilyn, Wilbraham, MA 01095 (US); ZHAO, Ming, East Longmeadow, MA 01028 (US)
(74) Representative: Ebner von Eschenbach, Jennifer
(86) International application number: PCT/US98/21097
(87) International publication number: WO 99/020721

(56) References cited:
- EP-A- 0 422 822
- WO-A-97/04051
- US-A- 3 950 298

## Description

This invention relates to foaming-resistant hydrocarbon oil and more particularly to a polymeric anti-foaming agent in such oil.

Suppression of foam generated in using hydrocarbon oils is of major importance with additives in minor effective amount in such oils being widely used for this purpose. Typical are the acrylate polymers disclosed in U.S. 3,166,508 to Fields. As there noted, other additives in such oils to improve oil-related performance can aggravate the tendency to foam and a continuing need exists to inhibit such undesirable foaming over a wide range of use conditions, particularly in new hydrocarbon oil formulations.

US-A-3 950 298 discloses terpolymers of N-alkylperfluorooctanesulfonamidoethyl (meth)acrylate, higher alkyl (meth)acrylate and polytetramethylene glycol mono- and di(meth)acrylate that provide oil repellency for coatings. The terpolymers that are dissolved in hydrocarbon solvents used in the coating process are low foaming which property is ascribed to the polytetramethylene glycol (meth)acrylate monomer.

### SUMMARY OF THE INVENTION

Now improved hydrocarbon oil compositions have been developed with enhanced resistance to foaming.

Accordingly, a principal object of this invention is to provide compositions of hydrocarbon oil which resist foaming over a wide range of use conditions.

An acrylate polymer anti-foaming agent for use in such improved foaming-resistant compositions is described herein.

Other objects of this invention will in part be obvious and will in part appear from the following description and claims.

These and other objects are accomplished by providing a composition of matter resistant to foaming comprising a hydrocarbon oil having a tendency to foam and a foam-inhibiting amount of an acrylate copolymer consisting essentially of polymerised fluorinated acrylate monomer providing a positive amount of fluorine greater than zero up to 15 weight % based on the weight of the copolymer, at least 50 weight % based on the weight of the copolymer of one or more non-fluorinated C₁₋₁₈ alkyl acrylates and, optionally monomers selected from the group consisting of alkylated styrene, C₅₋₁₈ alkyl methacrylates, C₅₋₁₈ maleates or fumarates, and vinyl esters of the C₅₋₁₈ aliphatic monocarboxylic acids; wherein said acrylate copolymer is present in a hydrocarbon solvent solution dispersed in the hydrocarbon oil.

The fluorinated acrylate monomer in the acrylate copolymer is preferably of the formula:

(R_{f})ₚQOCOCH=CH₂ I

wherein R_{f} is a fluoroaliphatic radical-containing group having 3 to 20 carbon atoms, optionally, carbon bonded H or Cl substituents may be present provided not more than one H or Cl atom is present for every two C atoms in the R_{f} group and provided further that R_{f} contains at least a terminal CF₃ group, Q is a polyvalent organic connecting group and p is 1 or 2.

### DETAILED DESCRIPTION

Fluorine in acrylate polymer anti-foaming additives significantly improves resistance to foaming of hydrocarbon oils. Such fluorine is provided by the presence of polymerized fluorinated acrylate as a monomer component of the acrylate polymer. The amount of such bound fluorine in the acrylate copolymer effective to inhibit foaming varies with the composition or formulation of the hydrocarbon oil in which the acrylate copolymer is dispersed. A positive amount (greater than zero) up to about 15 weight percent fluorine (F) based on the weight of the acrylate copolymer anti-foaming agent is generally adequate for most hydrocarbon oils with about 0.10 to about 5 weight percent preferred and 0.20 to 2 weight percent most perferred.

The preferred fluorinated acrylate monomer is known, has formula I above and is disclosed in European Patent Specification Publication Number 0234601 Bl, published July 24, 1991.

In Formula I, R_{f} is a monovalent, fluorinated, aliphatic, preferably saturated, organic radical having at least three and as many as twenty carbon atoms. The skeletal chain of R_{f} can be straight, branched or, if sufficiently large, cyclic and can include catenary divalent oxygen atoms or trivalent nitrogen atoms bonded only to carbon atoms. Preferably, R_{f} is fully fluorinated, but carbon bonded hydrogen or chlorine atoms can be present as substituents on the skeletal chain of R_{f} provided not more than one atom of hydrogen or chlorine is present for every two carbon atoms in the skeletal chain of R_{f} and further provided that R_{f} contains at least a terminal perfluoromethyl group. While R_{f} radicals containing a large number of carbon atoms function adequately, those containing not more than about 14 carbon atoms are preferred since large radicals usually use fluorine less efficiently than do smaller radicals. Preferably R_{f} has an average of about 6 to 10 carbon atoms.

Q in Formula I is an organic polyvalent (e.g. divalent) connecting group such as for example an acrylic or alicyclic radical of 1 to about 12 carbon atoms, or a polyvalent (e.g. divalent) aromatic radical of about 3 to 10 carbon atoms. Q can contain, for example, skeletal nitrogen, oxygen or sulfur atoms or carbonylimino, sulfonylimino, imino or carbonyl radicals. Q is unsubstituted or substituted by halogen atoms, hydroxyl, alkyl or aryl radicals and preferably is free from aliphatic unsaturation. Suitable Q radicals include -CH₂-, -C₂H₄-, -C₄H₈-, -C₆H₄-, -C₆H₃-, -CH₂C₆H₄CH₂-, -C₂H₄SC₂H₄-, -C₂H₄OC₄H₈-, -CH₂OC₂H₄-, -SO₂N(R⁶)C₂H₄-, -CON(R⁶)C₂H₄-, -C₃H₆CON (R⁶)C₂H₄-, -C₂H₄N(R⁶)C₂H₄-, -COOCH₂C(CH₃)CH₂-, -SO₂N(R⁶)CH₂CH(CH₃)-and -C₂H₄SO₂N(R⁶)C₄H₈-, where R⁶ is H or a C₁₋₄ alkyl radical. Preferably, Q is -CH₂-, C₂H₄-, or -SO₂N(R⁶)C₂H₄-.

Preferably monomers of Formula 1 contain at least about 30 and preferably about 40 to 60 weight percent fluorine.

Representative monomers of Formula 1 include:
C₈F₁₇SO₂N(CH₃)CH₂OCOCH=CH₂,
C₆F₁₃C₂H₄SC₂H₄OCOCH=CH₂, C₂F₅C₆F₁₀CH₂OCOCH=CH₂,
C₇F₁₅CH₂OCOCH=CH₂, C₇F₁₅CON(CH₃)C₂H₄OCOCH=CH₂,
(CF₃)₂CF(CF₂)₆CH₂CH(OH)CH₂OCOCH=CH₂,
(CF₃)₂CFOC₂F₄C₂H₄OCOCH=CH₂,
C₈F₁₇C₂H₄SO₂N(C₃H₇)C₂H₄OCOCH=CH₂,
C₇F₁₅C₂H₄CONHC₄H₈OCOCH=CH₂, 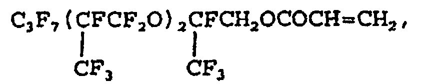 C₈F₁₇SO₂N(C₂H₅)C₄H₈OCOCH=CH₂,
(C₃F₇)₂C₆H₃SO₂N(CH₃)C₂H₄OCOCH=CH₂, 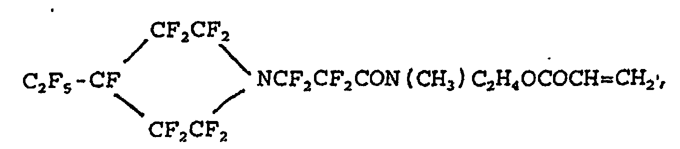 and
C₈F₁₇CF=CHCH₂N(CH₃)C₂H₄OCOCH=CH₂

Particularly preferred fluorinated acrylate monomers of Formula I are commercially available under the trademark Fluorad as FX-13, and FX-189 from Minnesota Mining and Manufacturing Company of St. Paul, Minnesota. FX-13 is 2-(N-ethylperflurorooctanesulfonamido) ethyl acrylate; FX-14 is the corresponding methacrylate, i.e. 2- (N ethylperfluorooctahe-sulfonamido) ethyl methacrylate. FX-189 is 2-(N-butylperfluorooctanesulfonamido) ethyl acrylate. These monomers have the following structures:
FX-13: 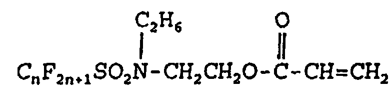 where n=7.5.
FX-14: 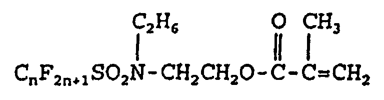 where n=7.5.
FX-189: 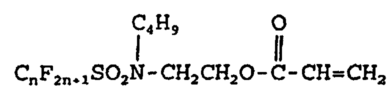 where n=8

The perfluoroalkyl group in FX-13, FX-14 and FX-189 is about 95% C₈F₁₇- with decreasing amounts of perfluorinated lower alkyl groups down to C₄F₉-. Of the C₈ portion, about 70% is the normal (linear) isomer and 30% a mixture of branched isomers. FX-189 contains about 49.5% F and has a nominal molecular weight of 653.

Non-fluorinated acrylate monomer(s) in the polymeric acrylate defoaming agent comprise one or more alkyl acrylates in which the alkyl radical has from 1 to 18 carbon atoms and which is present in at least 50 weight % in the acrylate copolymer. Optional additional monomers (other than said non-fluorinated alkyl acrylate) copolymerizable with such alkyl acrylate monomer can be present in the copolymer which include alkylated styrene, the higher alkyl (5 to 18 carbon atoms) methacrylates, higher alkyl maleates or fumarates and vinyl esters of the higher aliphatic monocarboxylic acids.

The amount of fluorinated acrylate monomer in the acrylate copolymer is adequate to provide the aforementioned positive amount up to about 15 weight % F in the acrylate copolymer. Using the commercial FX-13, FX-14 and FX-189 monomer described above, this amount of fluorinated acrylate monomer is about 0.001 to about 10 weight %, preferably about 0.1 to 5 weight %.

The molecular weight (weight average Mw) of the acrylate copolymer defoaming agent can vary within broad limits and is generally about 10,000 to about 250,000, preferably about 20,000 to 100,000 Daltons. At Mw's above 250,000 the acrylate copolymer tends to settle out in many hydrocarbon oils and lose defoaming effectiveness which relies on being finely dispersed in the oil. When Mw is lower than about 10,000 it tends to dissolve in and form the same phase as the oil and therefore cannot be a defoamer.

The acrylate copolymer antifoaming agents containing polymerized fluorinated acrylate monomer are effective at very low concentrations, i.e. less than about 1500 parts per million parts of hydrocarbon oil. From 20 to 500 parts of the copolymer is preferred, but this may be varied depending upon the nature of the oil, amounts less than 200 ppm by weight usually being sufficient. Heavy oils and oils containing foam-inducing adjuvants require more of the polymer than do base oils with lesser foaming characteristics. The acrylate copolymer defoaming agents are preferably added to the hydrocarbon oil as a solution in an hydrocarbon solvent.

The foaming-inhibiting effect of the acrylate copolymers is not materially affected by the presence of other adjuvants in the hydrocarbon oil. Since the acrylate copolymers are present in the oils in only very small quantities, the use in the oil of very acidic or very basic adjuvants has substantially no effect on performance of the antifoam additives. Compositions of hydrocarbon oils containing the present defoaming agents are storage-stable over long time periods and also when subjected to heat and pressure during operating use conditions.

Hydrocarbon oils rendered substantially foaming-resistant by incorporating a foam-inhibiting quantity of the present anti-foaming polymers are synthetic or petroleum stocks of varying viscosities such as lubricating oils for internal combustion engines and motors, diesel fuels, lubricants and pressure transfer media, e.g. industrial lubricants, process oils, hydraulic oils, turbine oils, spindle oils, journal bearing oils, pneumatic tool lubricants, etc. They may be synthetic or natural hydrocarbons of any type, i.e. paraffinic, naphthenic, aromatic or blended.

The acrylate copolymers are prepared by mass, emulsion or solution polymerization in the presence of a free-radical catalyst and, optionally, known polymerization regulators. When mass polymerized mixture of monomers and free-radical catalyst are agitated at 35°C to 150°C until polymerization is substantially complete. In emulsion polymerization, an emulsion of monomers in an aqueous solution with suitable emulsifying agents such as soap or alkyl-substituted sulfosuccinate is polymerized at from 25°C to the boiling point of water.

In solution polymerization, the monomers are dissolved in an inert liquid and the solution agitated in the presence of a catalyst at from 25°C to the boiling point of the solution. Solvents are generally substantially neutral organic liquids, e.g. aliphatic, aromatic alkyl aromatic or alicyclic hydrocarbons such as hexane, benzene, ethylbenzene or cyclohexane; ketones such as methyl ethyl ketone or acetone; esters such as ethyl acetate or methyl propionate; chlorinated hydrocarbons such as carbon tetrachloride or chloroform; ethers such as ethyl ether or dioxane. Since the polymers are used as oil additives, polymerization in a solvent with no deleterious effect on the hydrocarbon oil facilitates adding the resulting polymer solution directly to the oil without first separating the polymer from the reaction media. However, at completion of polymerization if the polymer solution is too viscous for convenient handling, the solvent can be stripped away and the solid polymer redissolved in another solvent at a concentration' (typically 30 to 60 wt.% polymer) providing a less viscous, more readily handled solution tailored for sale to the hydrocarbon oil formulator. Other reasons to change the solvent are to provide one which is more environmentally friendly, is safer in having a higher flash point and/or is less odorous.

Polymerization formation of the acrylate polymers can be conducted in the presence of polymerization modifiers regulating the solubility of the polymers. Such modifiers include'chain transfer agents such as alkyl mercaptans, e.g. tert-butyl mercaptan or n-dodecyl mercaptan; the polyhaloalkanes such as carbon tetrachloride, chloroform or bromoform; the nitroalkanes such as nitroethane or 2-nitropropane; liquid hydrocarbons such as toluene, ethylbenzene, or kerosene, etc. The chain transfer agent may be the solvent used during the reaction or it may be incorporated as an extraneous solvent, e.g. dioxane, acetone, isopropanol, paraffin hydrocarbons, etc.

Usable catalysts include organic peroxide compounds such as acetyl, benzoyl, lauroyl or stearoyl peroxide and tert-butyl or cumene hydroperoxide; inorganic per-compounds such as hydrogen peroxide, sodium perborate, or potassium persulfate, diazo compounds such as azo-bis-iso-butyronitrile, alpha, alpha-azodiisobutyramide, etc.

The polymerization reaction may be batch, e.g. by agitating the reactants (charged initially at once or partially metered in over time during polymerization) at 80-150°C until the reaction is complete or continuously by constantly removing polymer while replenishing one or more of'the monomers and/or catalyst and regulating agent. When operating batchwise the polymeric reaction product is usually separated from the reaction mixture by distilling off solvent and any unreacted starting material. However, as noted, separation may not be necessary when the reaction mixture as a solution of polymer in solvent is used directly as additive to the hydrocarbon oil.

The invention is further described in the fbllowing illustrative Examples which are not intended to limit the invention. Percentages are on a weight basis.

### EXAMPLE 1

### Acrylate Copolymer Synthesis

The following are charged to a one liter stirred reactor heated to 77-84°C.
197 gms ethyl acetate/isopropenol mixture (90/10 wt. ratio)
0.35 gm initiator azoisobutyronitrile- Vazo® 64 from Dupont Co.
2.5 gms 2-(N-butylperfluorooctanesulfonamido) ethyl acrylate (Fluorad™ FX-189 from 3M Co.) ("FA")
132 gms ethyl acrylate ("EA")/2-ethylhexylacrylate ("EHA") mixture (24.4/75.6 wt. ratio)

When the reactants reach reflux temperature, polymerization is continued for one hour. Then two liquid streams (LS₁ and LS₂ following) are simultaneously continuously added over 30 to 40 min. to the reaction medium while at 77-84°C.

LS₁ = 118 gms EA/EHA (36/64 wt. ratio).

LS₂ = 125 gms Vazo 64 dissolved in 123 gms ethyl acetate/isopropanol mixture - proportions as above.

After charging LS₁ and LS₂, polymerization continues for 4 hours followed by solvent stripping at a pressure of about 94.6 kPa (28 inch Hg). During stripping the pressure is gradually increased as temperature increases to about 120°C. When essentially all solvent is removed (leaving 100% copolymer solids in the reactor), a 30-60% acrylate copolymer solution is prepared by adding sufficient , hydrocarbon solvent to the reactor. The acrylate copolymer analysis is 29.7% EA, 69.3% EHA and 1% FA. Mw by size exclusion chromatography (SEC) is 60,000 Daltons. Elemental fluorine in the acrylate copolymer is 0.49%.

The foregoing procedure is repeated twice except using FX-13 and FX-14 as fluorinated acrylate monomer to provide acrylate copolymers with 0.49% elemental F.

### EXAMPLE II

### Foaming Resistance

The test method evaluating foaming-resistance is a modified form of ASTM D892-92. In summary the hydrocarbon oil sample containing finely dispersed antifoaming agent at 24±.5°C is blown with air at a constant rate (94±5 ml/min.) for 5 min. and then allowed to settle. The volume of foam generated above the oil level is measured in ml and the time to fully collapse the foam is measured in seconds. Performance in this phase is recorded under Sequence (Seq.) I in Tables following. This test is repeated on a second sample at 94±.5°C with results shown under "Seq. II" in the Tables. After foam from Seq. II collapses, the same sample is brought to 24°C and the procedure for Seq. I repeated with results shown under "Seq. III". The same sample from Seq. III test is then heated to 153±0.5°C and the Seq. I procedure repeated except at higher air flow of 200±5 ml/min. with results of this rather severe high temperature test shown under "Seq. IV".

2.5 gm defoaming agent at 40% solids in solution is diluted with solvent to 50 gm and 0.8 gm of this defoamer solution added to 200 gms. of test oil. The test oil blend is vigorously shaken for 3 min. to finely disperse the defoamer solution in the oil. Foaming resistance is measured using different hydrocarbon oils under the various sequences of the noted test method.

In this first test, the hydrocarbon oil is commercially available automatic transmission fluid (called "AFT1" and "AFT2"). Defoamer composition is the acrylate copolymer of Example 1.CTR means a control not according to the invention. Volume of foam for the various sequences ("Seq") is in ml. and collapse time in seconds.

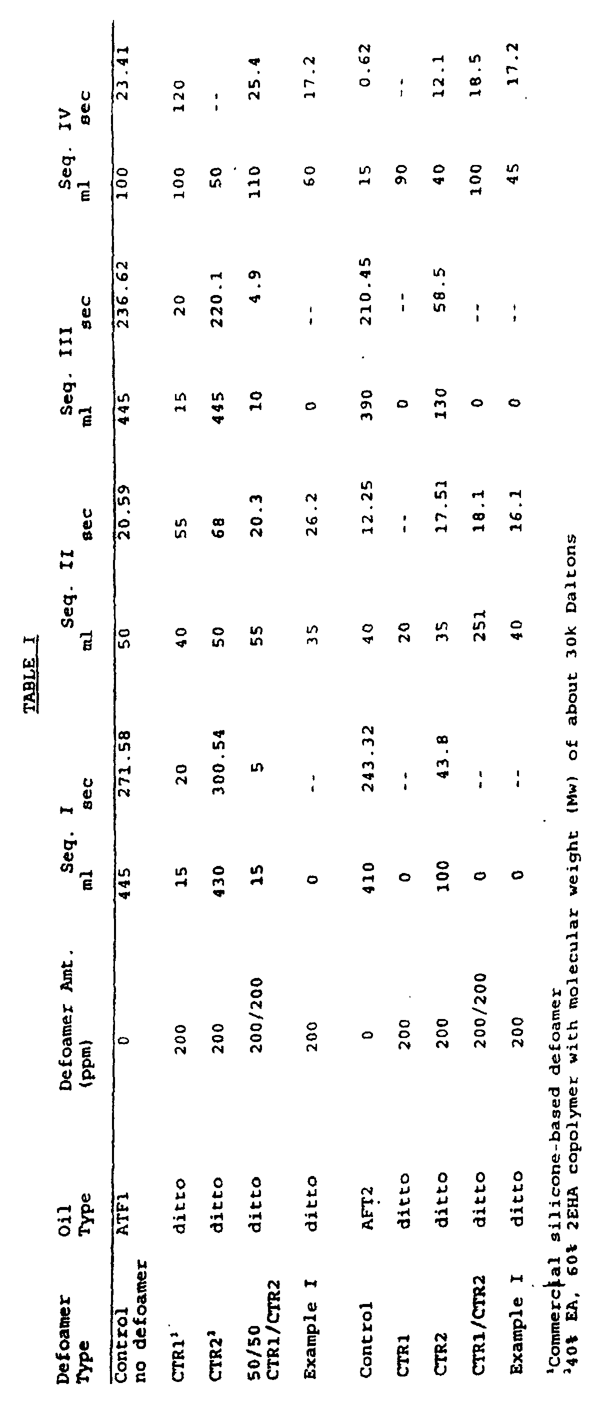

In this second test, the hydrocarbon oil is a gear oil. Defoamer types and performance measurements are as identified above.

**TABLE II**

| Defoamer Type | Defoamer Amt. (ppm) | Seq. I ml | Seq. II ml | Seq. III ml |
|---|---|---|---|---|
| Control - no defoamer | 0 | 30 | 500 | 430 |
| CTR | 50 | 30 | 245 | 40 |
| Example I | 50 | 30 | 25 | 35 |

In this third test, the hydrocarbon oil is turbine oil made of saturated neutral solvent. Defoamer types are identified as in Table I.

**TABLE III**

| Defoamer Type | Defoamer Amt. (ppm) | Seq. I ml | Seq. II ml | Seq. III ml |
|---|---|---|---|---|
| CTR1 | 0 | 185 | 25 | 340 |
| CTR2 | 20 | 15 | 25 | 305 |
| Example I | 20 | 0 | 15 | 0 |

Using the acrylate polymers containing FX-13 and FX-14 (instead of FX-189) the following results are obtained:

| | Defoamer Amount | Oil Type | Seq. I | Seq. II | Seq. III | Seq. IV |
|---|---|---|---|---|---|---|
| FX13 | 200 ppm | AFT1 | 15ml/8.2sec | 25/17 | 0 | 30 |
| FX14 | 200 ppm | AFT2 | 30/17.7 | 22/5.6 | 25/10.4 | 40/6 |

The above data illustrates the unexpected significant foaming-resistant results in various hydrocarbon oils of the acrylate copolymer defoamers containing about 1% bound fluorine (Example 1) in comparison with commercial non-fluorinated acrylates (CTR2) and silicone-based (CTR1) defoamers.

## Claims

1. A composition of matter resistant to foaming comprising:
a hydrocarbon oil having a tendency to foam, and
a foam-inhibiting amount of an acrylate copolymer consisting essentially of polymerised fluorinated acrylate monomer providing a positive amount of fluorine greater than zero up to 15 weight % based on the weight of the copolymer, at least 50 weight % based on the weight of the copolymer of one or more non-fluorinated C₁₋₁₈ alkyl acrylates and, optionally monomers selected from the group consisting of alkylated styrene, C₅₋₁₈ alkyl methacrylates, C₅₋₁₈ maleates or fumarates, and vinyl esters of the C₅₋₁₈ aliphatic monocarboxylic acids;
wherein said acrylate copolymer is present in a hydrocarbon solvent solution dispersed in the hydrocarbon oil.

2. The composition of claim 1 containing 0.10 to 5% fluorine.

3. The composition of claim 2 wherein the weight average molecular weight of the copolymer is 20,000 to 100,000 Daltons.

4. The composition of claim 3 wherein the fluorinated acrylate monomer is of the formula:
(R_{f})ₚQOCOCH=CH₂
wherein R_{f} is a fluoroaliphatic radical-containing group having 3 to 20 carbon atoms, optionally, carbon bonded H or Cl substituents may be present provided not more than one H or Cl atom is present for every two C atoms in the R_{f} group and provided further that R_{f} contains at least a terminal CF₃ group, Q is a polyvalent organic connecting group and p is 1 or 2.

5. The composition of claim 4 wherein Q is selected from -CH₂-, C₂H₄- or -SO₂N(R⁶)C₂H₄- where R⁶ is H or C₁₋₄ alkyl radical.

6. The composition of claim 5 wherein the fluorinated acrylate monomer is selected from 2-(N-ethylperfluorooctanesulfonamido) ethyl acrylate, and 2-(N-butylperfluorooctane sulfonamido) ethyl acrylate.

7. The composition of claim 6 wherein the fluorinated acrylate monomer is 2-(N-butylperfluorooctanesulfonamido) ethyl acrylate.

8. The composition of claim 6 wherein the fluorinated acrylate monomer is 2-(N-ethylperfluorooctanesulfonamido) ethyl acrylate.

9. The composition of claim 3 wherein the fluorinated acrylate monomer is 2-(N-ethylperfluorooctanesufonamido) ethyl methacrylate.

10. The composition of any of claims 2, 3, 4, 5, 6 or 7 wherein the fluorinated acrylate monomer in the copolymer is 0.001 to 10 weight %.

## Patentansprüche

1. Zusammensetzung von Substanzen, beständig gegen Schaumbildung, aufweisend:
Ein Kohlenwasserstofföl mit einer Neigung zur Schaumbildung und
eine schaumhemmende Menge eines Acrylatcopolymers, im Wesentlichen bestehend aus polymerisiertem, fluoriertem Acrylatmonomer, das eine positive Menge an Fluor mit mehr als 0 und bis zu 15 Gew.% bezogen auf das Gewicht des Copolymers bereitstellt, mindestens 50 Gew.% bezogen auf das Gewicht des Copolymers von einem oder mehreren nichtfluorierten C₁₋₁₈-Alkylacrylaten und wahlweise Monomeren, ausgewählt aus der Gruppe, bestehend aus alkyliertem Styrol, C₅₋₁₈-Alkylmethacrylaten, C₅₋₁₈-Maleaten oder -Fumaraten und Vinylestern der C₅₋₁₈-aliphatischen Monocarbonsäuren;
worin das Acrylatcopolymer in einer Kohlenwasserstoff-Lösemittel-Lösung vorliegt, die in dem Kohlenwasserstofföl dispergiert ist.

2. Zusammensetzung nach Anspruch 1, enthaltend 0,10% bis 5% Fluor.

3. Zusammensetzung nach Anspruch 2, worin die massegemittelte relative Molekülmasse des Copolymers 20.000 bis 100.000 Dalton beträgt.

4. Zusammensetzung nach Anspruch 3, worin das fluorierte Acrylatmonomer die Formel hat:
(R_{f})ₚQOCOCH=CH₂
worin R_{f} eine einen fluoraliphatischen Rest enthaltende Gruppe mit 3 bis 20 Kohlenstoffatomen ist, wobei wahlweise an Kohlenstoff gebundene H-oder CI-Substituenten unter der Voraussetzung vorhanden sein können, dass nicht mehr als ein H- oder CI-Atom für jedes zweite C-Atom in der R_{f}-Gruppe vorhanden ist, und ferner vorausgesetzt, dass R_{f} mindestens eine terminale CF₃-Gruppe enthält, Q eine mehrwertige organische, verknüpfende Gruppe ist und p 1 oder 2 ist.

5. Zusammensetzung nach Anspruch 4, worin Q ausgewählt ist aus: -CH₂-, C₂H₄- oder -SO₂N(R⁶)C₂H₄-, worin R⁶ H ist oder ein C₁₋₄-Alkylrest.

6. Zusammensetzung nach Anspruch 5, worin das fluorierte Acrylatmonomer ausgewählt ist aus 2-(N-Ethylperfluoroctansulfonamido)ethylacrylat und 2-(N-Butylperfluoroctansulfonamido)ethylacrylat.

7. Zusammensetzung nach Anspruch 6, worin das fluorierte Acrylatmonomer 2-(N-Butylperfluoroctansulfonamido)ethylacrylat ist.

8. Zusammensetzung nach Anspruch 6, worin das fluorierte Acrylatmonomer 2-(N-Ethylperfluoroctansulfonamido)ethylacrylat ist.

9. Zusammensetzung nach Anspruch 3, worin das fluorierte Acrylatmonomer 2-(N-Ethylperfluoroctansulfonamido)ethylmethacrylat ist.

10. Zusammensetzung nach einem der Ansprüche 2, 3, 4, 5, 6 oder 7, worin das fluorierte Acrylatmonomer in dem Copolymer 0,001% bis 10 Gew.% ausmacht.

## Revendications

1. Composition de matière résistant au moussage, comprenant :
une huile d'hydrocarbure présentant une tendance au moussage, et
une quantité inhibitrice de mousse d'un copolymère acrylique constitué essentiellement de monomère acrylique fluoré polymérisé procurant une quantité positive de fluor supérieure à zéro et jusqu'à 15% en poids par rapport au poids du copolymère, d'au moins 50% en poids par rapport au poids du copolymère d'un ou de plusieurs acrylates d'alkyle en C₁-C₁₈ non fluorés, et éventuellement de monomères choisis parmi le groupe constitué de styrène alkylé, de méthacrylates d'alkyle en C₅-C₁₈, de fumarates ou maléates en C₅-C₁₈ et d'esters vinyliques d'acides monocarboxyliques aliphatiques en C₅-C₁₈,
dans laquelle le copolymère acrylique est présent dans une solution de solvant hydrocarboné dispersée dans l'huile d'hydrocarbure.

2. Composition suivant la revendication 1, contenant 0,10 à 5% de fluor.

3. Composition suivant la revendication 2, dans laquelle le poids moléculaire moyen pondéral du copolymère est de 20.000 à 100.000 Daltons.

4. Composition suivant la revendication 3, dans laquelle le monomère acrylique fluoré répond à la formule :
(R_{f})ₚQOCOCH=CH₂
dans laquelle R_{f} est un groupe contenant un radical fluoroaliphatique et comportant 3 à 20 atomes de carbone, des substituants H ou CI fixés sur du carbone pouvant éventuellement être présents pourvu que pas plus d'un atome de H ou de CI ne soit présent pour chaque fois deux atomes de C dans le groupe R_{f} et pourvu, en outre, que R_{f} contienne au moins un groupe CF₃ terminal, Q soit un groupe de liaison organique polyvalent et p soit égal à 1 ou 2.

5. Composition suivant la revendication 4, dans laquelle Q est choisi parmi -CH₂-, -C₂H₄- ou -SO₂N(R⁶)C₂H₄-, où R⁶ représente H ou un radical alkyle en C₁-C₄.

6. Composition suivant la revendication 5, dans laquelle le monomère acrylique fluoré est choisi parmi de l'acrylate de 2-(N-éthylperfluorooctanesuifonamido)-éthyle et de l'acrylate de 2-(N-butylperfluorooctanesulfonamido)-éthyle.

7. Composition suivant la revendication 6, dans laquelle le monomère acrylique fluoré est de l'acrylate de 2-(N-butylperfluorooctanesulfonamido)-éthyle.

8. Composition suivant la revendication 6, **caractérisée en ce que** le monomère acrylique fluoré est de l'acrylate de 2-(N-éthylperfluorooctanesulfonamido)-éthyle.

9. Composition suivant la revendication 3, dans laquelle le monomère acrylique fluoré est du méthacrylate de 2-(N-éthylperfluorooctanesuifonamido)-éthyle.

10. Composition suivant l'une quelconque des revendications 2, 3, 4, 5, 6 ou 7, dans laquelle le monomère acrylique fluoré dans le copolymère est de 0,001 jusqu'à 10% en poids.
